# NEUE EUROPÄISCHE PATENTSCHRIFT

(11) **EP 0 527 397 B2**
(45) Veröffentlichungstag und Bekanntmachung des Hinweises auf die Entscheidung über den Einspruch: **03.03.1999**
(45) Hinweis auf die Patenterteilung: 25.10.1995
(21) Anmeldenummer: 92113036.5
(22) Anmeldetag: 30.07.1992
(51) Int. Cl.: B24B 13/00, B24B 13/06, G05B 19/18

(54) **Vorrichtung zum Herstellen einer Bifokal-Contactlinse**
Device for making a bifocal contact lens
Dispositif de fabrication des lentilles de contact bifocales

(30) Priorität: 02.08.1991 DE 4125707
(43) Veröffentlichungstag der Anmeldung: 17.02.1993
(73) Patentinhaber: HECHT CONTACTLINSEN GMBH, D-79280 Au (DE)
(72) Erfinder: Debon, Charles, W-7813 Staufen (DE); Muckenhirn, Dieter, W-7801 Au (DE)
(74) Vertreter: Prüfer, Lutz H., Dipl.-Phys.

(56) Entgegenhaltungen:
- EP-A- 0 248 489
- EP-B- 141 867
- CH-A- 674 325
- US-A- 3 913 274

## Beschreibung

Die Erfindung betrifft eine bifokale Contactlinse nach dem Oberbegriff des Anspruches 4 sowie eine Vorrichtung gemäß Oberbegriff des Anspruchs 1 zum Herstellen einer derartigen Contactlinse.

Bei dem Herstellen einer bifokalen Contactlinse mit einer bekannten Vorrichtung fallen zwar die Flächen von Nahteil und Fernteil der Linse im Mittelpunkt zusammen. Angrenzend an den Mittelpunkt jedoch entsteht zur Seite hin eine stufenförmige Trennlinie, die sowohl aus Gründen der besseren Verträglichkeit als auch aus ästhetischen Gründen unerwünscht ist.

Aus der EP-A-0 248 489 ist eine Contactlinse nach dem Oberbegriff des Anspruches 4 bekannt. Hierbei ist das Nahteil relativ zum Fernteil so gekippt, daß der Rand des Nahteiles stufenlos in die Fläche des Fernteiles übergeht.

Aus der CH-A-674 325 ist eine Vorrichtung zum Herstellen asphärischer Torusflächen und damit auch zum Herstellen einer Bifokal-Contactlinse bekannt. Mit dieser dem Oberbegriff des Anspruchs 1 entsprechenden Vorrichtung können sowohl konkave als auch konvexe asphärische Flächen hergestellt werden.

Aufgabe der Erfindung ist es, eine Bifokal-Contactlinse zu schaffen, die einen knickfreien Übergang von Fernteil zum Nahteil aufweist, wobei die optische Qualität in Zentrum der Linse unbeeinträchtigt ist. Ferner solle eine Vorrichtung geschaffen werden, mit der eine derartige Contactlinse herstellbar ist.

Diese Aufgabe wird durch die im Patenanspruch 1 gekennzeichnete Vorrichtung gelöst. Eine damit hergestellte Bifokal-Contactlinse ist im Patentanspruch 4 gekennzeichnet.

Weitere Merkmale und Zweckmäßigkeiten der Erfindung ergeben sich aus der Beschreibung eines Ausführungsbeispieles anhand der Figuren. Von den Figuren zeigen:
- Fig. 1: eine Draufsicht auf eine schematisch dargestellte Vorrichtung zum Herstellen der Bifokal-Contactlinse;
- Fig 1a: eine perspektivische Darstellung einer Linse mit Trennstufe;
- Fig. 1b: eine perspektivische Darstellung einer Linse ohne Trennstufe;
- Fig. 2: eine Stirnansicht mit der in Fig. 1. gezeigten Vorrichtung;

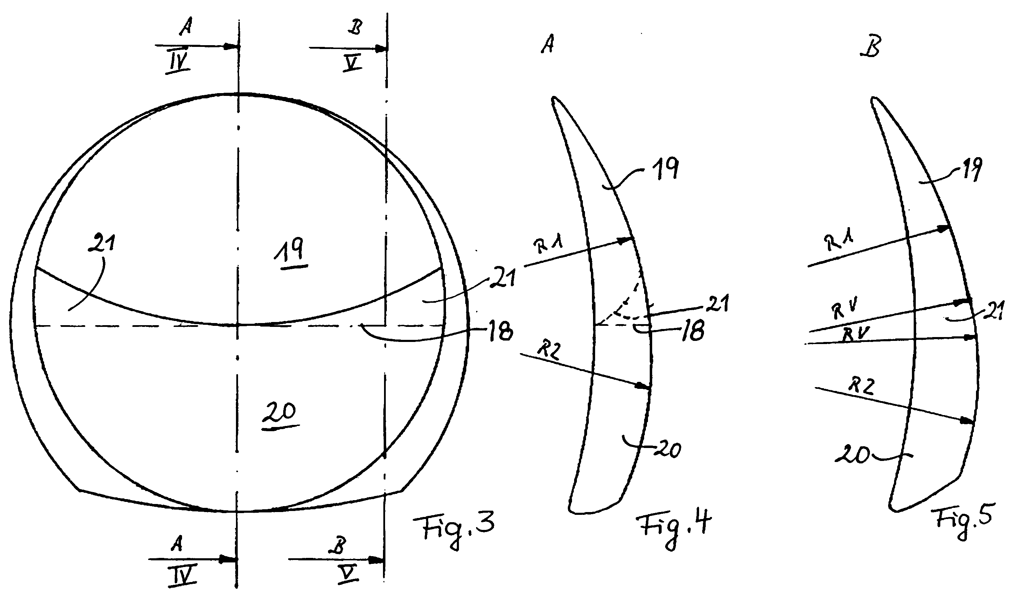

- Fig. 3: eine Draufsicht auf die erfindungsgemäß hergestellte Contactlinse;
- Fig. 4: die Linse entlang der Schnittlinie IV/IV in Fig. 3;
- Fig. 5: eine Schnittdarstellung entlang der Schnittlinie V/V in Fig. 3.

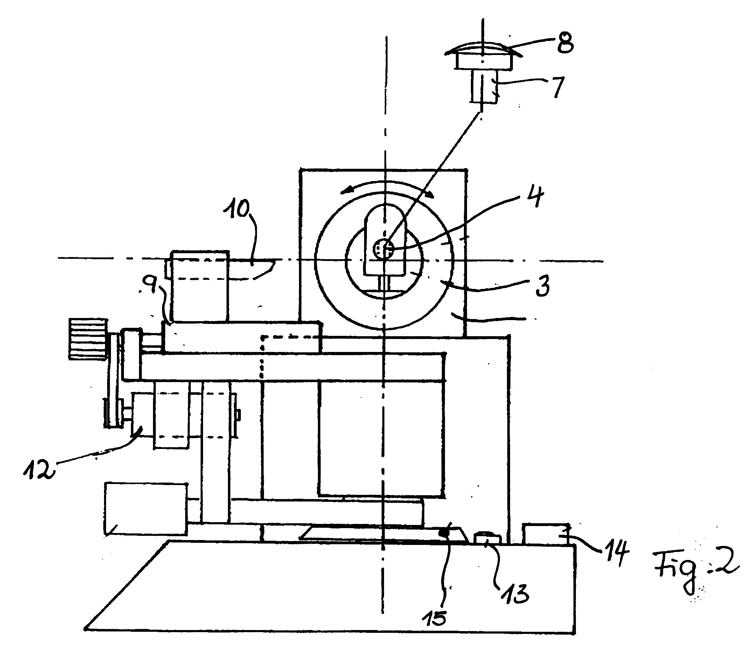

Auf einem Rahmen 1 ist ein Support 2 montiert, der auf einem Kreuzschlitten sowohl entlang der gezeigten Symmetrieachse 22, als auch in einer Richtung quer dazu bewegbar ist. Der Support 2 trägt einen Excenterkopf 3 mit einem mit diesem verbundenen Linsenhalter 4. Der Linsenhalter 4 ist, wie am besten aus Fig. 2 ersichtlich ist, als eine Stange ausgebildet, die sich parallel zur Symmetrieachse des Excenterkopfes erstreckt und auf einer durch die Symmetrieachse gehenden Geraden relativ zur Symmetrieachse verschiebbar ist. Der Linsenhalter weist eine Bohrung 5 auf, in die ein pilzförmiger Halter 7, auf dem der Linsenrohling 8 aufgespannt ist, eingesetzt und mittels einer Arretierschraube 6 festgehalten wird. Es ist ein Antrieb 23 zum Verstellen der Exzentizität der Lage des Linsenhaltes 4 vorgesehen.

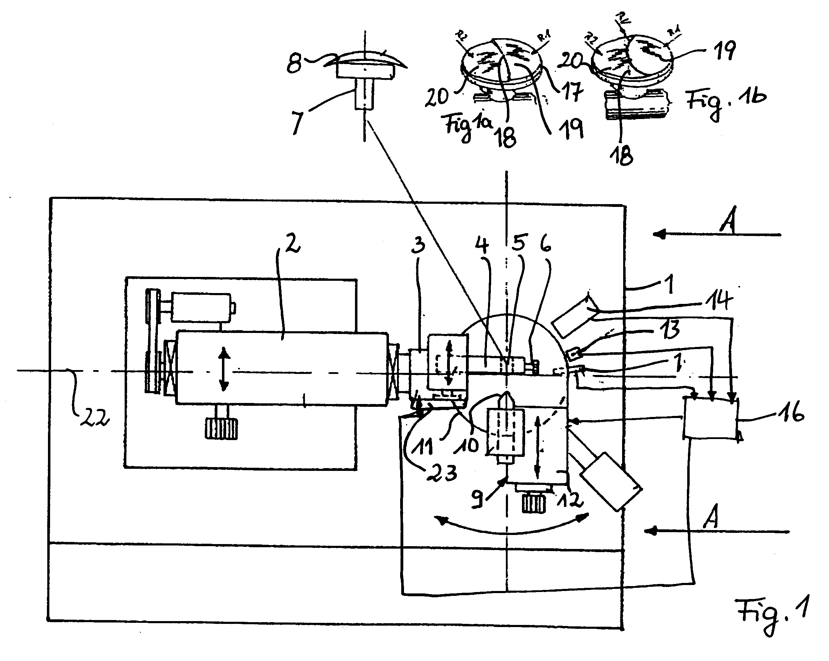

Ferner ist ein Schlitten 9 mit einem Halter für einen Diamantstichel 10 vorgesehen. Der Schlitten 9 ist über eine Lagerung mit dem Rahmen 1 derart verbunden, daß der Halter für den Diamantstichel 10 einerseits auf einem Radius 11 schwenkbar angeordnet ist, dessen Mittelpunkt mit der Symmetrieachse des Excenterkopfes 3 zusammenfällt, wenn der Support 2 in Querrichtung gesehen in seiner Nullstellung steht. Der Halter für den Diamantstichel 10 selbst ist so verschiebbar, daß sein Abstand zur Symmetrieachse 22 des Excenterkopfes einstellbar ist. Der Diamantstichel 10 liegt mit seiner Schneidspitze auf der Höhe der Symmetrieachse 22. Es ist ein Antrieb 12 zum Hin- und Herbewegen des Schlittens 9 senkrecht zur Symmetrieachse 22 des Excenterkopfes 3 vorgesehen. Wie am besten aus Fig. 1 ersichtlich ist, sind ein Startschalter 13 zum Einschalten des Antriebes 12 und ein Endschalter 14 zum Ausschalten des Antriebes 12 und des Antriebes 23 vorgesehen. Die Einrichtung zum Schwenken des Schlittens 9 weist einen nach Graden umfangsmäßig einstellbaren Auslösestift 15 auf, der im Zusammenwirken mit dem Startschalter 13 bzw. Endschalter 14 den Antrieb 12 ein- bzw. ausschaltet. Durch Einstellen des Auslösestiftes 15 kann die Startposition und somit die Zonenhöhe der Contactlinse eingestellt werden.

Es ist eine Steuerung 16 vorgesehen, die eingangsseitig mit dem Ausgangssignal von Startschalter 13 und Endschalter 14 und der umfangmäßigen Einstellung des Auslösestiftes 15 beaufschlagt wird. Ausgangsseitig ist die Steuerung mit dem Antrieb 12 in des Schlittens 9 und mit dem Antrieb 23 für die Verstellung der Exzentrizität verbunden.

Im Betrieb wird der Halter 7 mit dem aufgespannten Linsenrohling 8 in der oben beschriebenen Weise in die Bohrung 5 des Linsenhalters 4 eingesetzt, und mittels der Arretierschraube 6 fest montiert.

Es wird zunächst ein Radius R₁ von beispielsweise 8 mm dadurch eingestellt, daß der Diamantstichel 10 auf einen dem Radius R₁ entsprechendenAbstand von der Symmetrieachse des Excenterkopfes eingestellt wird. Der Diamant 10 wird dann mit dem Radius R₁ vom oberen Rand 17 des Linsenrohlings 8 bei gleichzeitigen Rotieren des Linsenrohlings durch Einschalten des Supports 2 bewegt und schneidet damit den Fernteil 19 der zu formenden Linse. Der mittlere Rand 18 geht durch den Schnittpunkt von der Symmetrieachse des Excenterkopfes und dem Radius des Diamantstichels 10.

Der Nahteil 20 soll einen kleineren Radius R₂ von beispielsweise 7,5 mm haben. Zu diesem Zweck wird an der Stelle des mittleren Randes 18 der Linsenhalter 4 am Excenterkopf 3 so versetzt, daß der Abstand der Linsenflächen von der Symmetrieachse 22 von vorher 8 auf jetzt 7,5 mm verkleinert wird. Gleichzeitig wird der Schlitten 9 und damit der Diamantstichel 10 so zum Mittelpunkt hin versetzt, daß der Radius von vorher 8 mm auf 7,5 mm verkleinert wird. Anschließend wird durch Weiterbewegen des Diamantstichels 10 auf dem Radius 11 der Nahteil 20 geschnitten. Durch diesen Vorgang entsteht die in Fig. 1a perspektivisch gezeigte Linse mit einer Trennlinie zwischen Fernteil und Nahteil entlang des mittleren Randes 18. In der Mitte der Linse ist der Übergang stufenlos, zum Rand hin jedoch wird die Stufe zunehmend größer. In dem Beispiel ist die Stufenhöhe bei einem Linsendurchmesser von 9,6 mm 0,137 mm hoch.

Zum Vermeiden bzw. Beseitigen der so entstehenden Stufe erfolgt zusätzlich zu dem oben beschriebenen Vorgang ein Materialabtrag mit dem Diamantstichel 10 in folgenderweise:
Am mittleren Rand 18 und damit an der Trennlinie zwischen Fernteil 19 und Nahteil 20 bleibt an der Stelle des mittleren Randes 18 der Radius R₂ für das Nahteil eingestellt. Über einen voreingestellten Winkelbereich von vorzugsweise in der Größenordnung von 10° treibt die Steuerung 16 den Antrieb 12 für den Schlitten und damit den Diamantstichel 10 so an, daß bei gleichzeitigem Schwenken des Stichel auf dem Kreisschlitten von dem Ort des mittleren Randes über den voreingestellten Bereich von etwa 10° in Richtung zum oberen Rand 17 des Fernteiles hinein, der Radius sich kontinuierlich so ändert, daß er am Ende des Winkelbereiches gleich dem Radius R₂ plus dem Wert der Stufenhöhe ist, also (0,75 + 0,137) mm. Parallel zur Vergrößerung des Radius R₂ erfolgt aufgrund der Ansteuerung des Antriebes 23 über die Steuerung 16 ein Versetzen des Linsenhalters 4 am Excenterkopf 3 derart, daß der Abstand der Linsenoberfläche von der Symmetrieachse 23 von R₂ (also in dem Beispiel 7,5 mm) ebenfalls um die Zonenhöhe gleichzeitig vergrößert wird. Dadurch wird erreicht, daß ein Abschnitt 21 abgetragen wird, der sich vom mittleren Rand 18 seitlich bis zu dem voreingestellten Winkelbereich hin erstreckt und in dem die Fläche des Nahteiles 20 kontinuierlich in die Fläche des Fernteiles 19 übergeht. Im Mittelbereich der Linse tritt keinerlei Beinträchtigung der optischen Qualität ein. Die Randbereiche 21 sind für die optische Qualität der Linse ohne Bedeutung. Durch den kontinuierlichen Übergang werden die beim Stand der Technik auftretenden kosmetischen Nachteile und Nachteile beim Tagen beseitigt. Die fertige Linse mit dem gleitenden Übergang ist in Fig. 1b dargestellt.

## Patentansprüche

1. Vorrichtung zum Herstellen einer Bifokal-Contactlinse, mit einem Support (2) und einem von diesem antreibbar getragenen Exzenterkopf (3) mit einem Linsenhalter (4, 7) zum Aufnehmen eines zu bearbeitenden Linsenrohlings (8), wobei der Linsenhalter (4, 7) am Exzenterkopf (3) in einer Richtung senkrecht zur Symmetrieachse (22) des Exzenterkopfes (3) in radialer Richtung verschiebbar ist, einem auf einem Schlitten (9) auf einer Kreisbahn um einen auf der Symmetrieachse (22) liegenden Mittelpunkt und zusätzlich in Richtung senkrecht zu der Symmetrieachse zum Ändern der Größe des Radius verfahrbaren Stichelhalter zum Halte eines Schneidstichels (10) und einer Steuerung (16), dadurch gekennzeichnet, daß die Steuerung (16) so ausgebildet ist, daß der Antrieb (12) den Stichel (10) zum Schneiden des Fernteiles (19) auf einen ersten Radius (R₁) und zum Schneiden des Nahteiles (20) auf einen zweiten, kleineren Radius (R₂) einstellt und in einem vorgewählten Winkelbereich ausgehend von dem mittleren Rand (18) zwischen den beiden Teilen in den Fernteil (19) hinein den Radius ausgehend vom zweiten Radius (R₂) bei gleichzeitigem Nachführen der Exzentrizität durch entsprechendes Versetzen des Linsenhalters (4, 7) am Exzenterkopf (3) kontinuierlich so vergrößert, daß das Nahteil (20) kontinuierlich in das Fernteil (19) übergeht.

2. Vorrichtung nach Anspruch 1,
dadurch gekennzeichnet, daß ein erster und ein zweiter Tastschalter (13, 14) im Abstand des vorbestimmten Winkelbereiches vorgesehen sind zum Ein- bzw. Ausschalten eines den Stichel (10) verfahrenden Antriebes.

3. Vorrichtung nach Anspruch 1 oder 2,
dadurch gekennzeichnet, daß die Steuerung (16) so ausgebildet ist, daß die entsprechende Versetzung des Linsenhalters (4, 7) am Exzenterkopf (3) derart erfolgt, daß der Abstand des Mittelpunktes der Linsenoberfläche der zu fertigenden Linse von der Symmetrieachse von R₁ auf R₂ geändert wird.

4. Contactlinse mit einem Fernteil (19) und einem mit diesem zusammenstoßenden Nahteil (20), wobei die Fläche des Fernteiles (19) einen ersten Radius (R₁) und die entsprechende Fläche des Nahteiles (20) einen zweiten Radius (R₂) aufweist, dadurch gekennzeichnet, daß der Nahteil (20) und der Fernteil (19) im Mittelpunkt der Linsenoberfläche zusammenstoßen und unmittelbar beidseitig des Mittelpunktes der Linsenoberfläche seitliche sich vom Nahteil (20) in den Fernteil (19) erstreckende Übergangsbereiche (21) vorgesehen sind, in denen sich der Radius der Linsenoberfläche kontinuierlich vom zweiten Radius (R₂) zum ersten Radius (R₁) hin ändert.

## Claims

1. Device for manufacturing a bifocal contact lens, comprising a support (2) and an eccentric head (3) carried for being driven on said support and having a lens holder (4, 7) for receiving a lens blank (8) to be machined, wherein said lens holder (4, 7) is displaceable on said eccentric head (3) in a direction normal to the axis of symmetry (22) of said eccentric head (3) in a radial direction; and comprising a chisel holder for holding a cutting chisel (10), which is displaceable on a slide (9) along a circular path about a center on said axis of symmetry and additionally in a direction orthogonal with respect to said axis of symmetry for varying the size of the radius; and comprising moreover a control (16),
characterized in that said control (16) is so designed that the drive system (12) adjust said chisel (10) for cutting the long-distance vision section (19) to a first radius (R₁) and for cutting the short-distance vision section (20) to a second smaller radius (R₂) and increases continuously the radius from said second radius (R₂) within a selected angular area from the central region (18) between said two vision sections into said long-distance vision section (19), with simultaneously making the eccentricity to follow on account of a corresponding displacement of said lens holder (4, 7) on said eccentric head (3), such that said short-distance vision section passescontinuously into said long-distance vision section (19).

2. Device according to claim 1,
characterized in that first and second pushbuttons (13, 14) are provided at the distance of said predetermined angular area for switching a drive system for displacing said chisel (10) on or off, respectively.

3. Device according to claim 1 or 2,
characterized in that said control (16) is so configured that the corresponding displacement of said lens holder (4, 7) on said eccentric head (3) takes place so as to vary the distance between the center on the surface of the lens to be manufactured and said axis of symmetry from R₁ to R₂.

4. Contact lens having a long-distance vision section (19) and a short-distance vision section (20) abutting thereon, wherein the zone of said long-distance vision section (19) has a first radius (R₁), whereas the corresponding zone of said short-distance vision section (20) has a second radius (R₂),
characterized in that said short-distance vision section (20) and said long-distance vision section (19) abut in the center of the lens surface and zones of transition (21) are provided immediately on either side of a center of the lens surface the zones of transition extending laterally from said short-distance vision section (20) into said long-distance vision section (19), in the zones of transition the radius of the lens surface continously varying from said second radius (R₂) to said first radius (R₁).

## Revendications

1. Dispositif de fabrication des lentilles de contact bifocales, comprenant un support (2) et une tête excentrique (3) portée par ledit support à être entraînée, à un porte-lentille (4, 7) qui reçoit une ébauche de lentille (8) à travailler, dans lequel ledit porte-lentille (4, 7) est déplaçable à ladite tête excentrique (3) en un sens orthogonal à l'axe de symétrie (22) de ladite tête excentrique (3) en direction radiale; et comprenant un porte-burin à porter le burin de gravure (10), qui est déplaçable sur un chariot (9) sur une trajectoire circulaire autour d'un centre qui se trouve sur ledit axe de symétrie (22) ainsi qu'aussi le long d'une direction orthogonale audit axe de symétrie afin de verier la grandeur du rayon; et également comportant un organe de commande (16),
**caractérisé en ce** que ledit organe de commande (16) est configuré de façon que l'unité d'entraînement (12) ajuste ledit burin (10) à tailler la partie de vision à distance (19) à un premier rayon (R₁) et à tailler de la partie de vision à proximité (20) à un deuxième, plus petit rayon (R₂), et, au dedans une portée angulaire choisie à partir de la marge centrale (18) entre lesdites deux parties de vision, élargit le rayon en continu à partie dudit deuxième rayon (R₂) dans ladite partie de vision à distance (19), à poursuite simultanée de l'excentricité grâce à un déplacement approprié dudit porte-lentille (4, 7) à ladite tête excentrique (3), de façon que ladite partie de vision à proximité se convertisse en continu en ladite partie de vision à distance (19).

2. Dispositif selon la revendication 1,
**caractérisé en ce** qu'un premier poussoir et un deuxième poussoir (13, 14) sont prévus à l'écart de ladite portée angulaire prédestinée à mettre une unité d'entraînement à entraîner ledit burin dans le ou respectivement hors circuit.

3. Dispositif selon la revendication 1 ou 2,
**caractérisé en ce** que ledit organe de commande (16) est configuré d'une manière que le déplacement approprié dudit porte-lentille (4, 7) à ladite tête excentrique (3) se fasse de façon que l'écart entre le centre sur la surface de la lentille à fabriquer et ledit axe de symétrie soit varié de R₁ à R₂.

4. Lentille de contact à une partie de vision à distance (19) et une partie de vision à proximité (20) se rencontrant avec celle-ci, dans laquelle l'aire de ladite partie de vision à distance (19) présente un premier rayon (R₁), pendant que l'aire correspondante de ladite partie de vision à proximité (20) a un deuxième rayon (R₂),
charactérisé en ce que ladite partie de vision à proximité (20) et ladite partie de vision à distance (19) se rencontrent dans le centre de la surface de la lentille et que des zones de transition (21) latérales sont prévues, qui s'étendent de ladite partie de vision à proximité (20) dans ladite partie de vision à distance (19) directement des deux côtés du centre de la surface de la lentille, au dedans lesquelles zones de transition le rayon de la surface de la lentille se convertit au continu dudit deuxième rayon (R₂) en ledit premier rayon (R₁).
